# EUROPÄISCHE PATENTSCHRIFT

(11) **EP 2 731 794 B1**
(45) Veröffentlichungstag und Bekanntmachung des Hinweises auf die Patenterteilung: **28.11.2018**
(21) Anmeldenummer: 12746001.2
(22) Anmeldetag: 10.07.2012
(51) Int. Cl.: B32B 3/12

(54) **WABENKERNSTABILISIERUNG FÜR SANDWICH-BAUTEILE**
STABILISING THE HONEYCOMB CORE FOR SANDWICH COMPONENTS
STABILISATION D'UNE ÂME EN NID D'ABEILLES POUR DES ÉLÉMENTS EN SANDWICH

(30) Priorität: 14.07.2011 DE 102011107725
(43) Veröffentlichungstag der Anmeldung: 21.05.2014
(73) Patentinhaber: Premium AEROTEC GmbH, 86179 Augsburg (DE)
(72) Erfinder: KUNTZ, Julian, 86179 Augsburg (DE); KLENNER, Jürgen, 28359 Bremen (DE); TROST, Ralf, 86179 Augsburg (DE); MICHELER, Joseph, 86159 Augsburg (DE)
(74) Vertreter: LKGLOBAL Lorenz & Kopf PartG mbB Patentanwälte
(86) Internationale Anmeldenummer: PCT/DE2012/000689
(87) Internationale Veröffentlichungsnummer: WO 2013/007235

(56) Entgegenhaltungen:
- EP-A1- 1 897 680

## Beschreibung

Die vorliegende Erfindung betrifft ein Verfahren zum Stabilisieren eines Wabenkerns für ein Sandwich-Strukturbauteil, eine Vorrichtung zum Stabilisieren eines Wabenkerns für ein Sandwich-Strukturbauteil, und eine stabilisierte Kernlage für ein Sandwich-Strukturbauteil.

Wabenstrukturen werden beispielsweise als Kernstruktur eines Leichtbau-Sandwich-Bauteils verwendet. Die Wabenstrukturen werden dabei in einem Laminierprozess mit Deckhäuten bzw. Deckschichten verbunden, so dass ein Halbzeug für ein leichtes und dennoch stabiles Bauteil zur Verfügung steht. Bei entsprechend vorkonfektionierten Wabenstrukturen sowie entsprechend zugeschnittener Deckschichten kann statt eines Halbzeugs auch gleich das fertige Bauteil hergestellt werden. Es hat sich jedoch gezeigt, dass in dem anschließenden Laminierprozess oftmals Harz aus dem Deckschichtmaterial in die Wabenöffnungen gelangt, was den Herstellungsprozess nachteilig beeinträchtigt, beispielsweise da es bei einer zu großen Harz- oder Matrixmaterialansammlung innerhalb der Wabenhohlräume oder fehlendem Harz in den Deckschichten zu einem Ausschuss des Bauteils kommt.

In der EP 1 897 680 A1 ist ein Verfahren zur Herstellung eines Sandwichbauteils mit einem Wabenkern beschrieben, bei dem ein Gelege hergestellt wird, wobei ein Wabenkern mit wenigstens einer aushärtbaren Klebeschicht, einer Sperrschicht und einer äußeren Faserschicht versehen wird. Das Gelege wird in einem gasdichten Raum eingeschlossen und ein Vakuum wird erzeugt, wobei auch gleichzeitig ein Aushärten der Klebeschicht erfolgt. Anschließend ist eine Infusion der äußeren Faserschichten mit Matrixmaterial vorgesehen, sowie ein Aushärten des Matrixmaterials unter Vakuum.

Eine Aufgabe der vorliegenden Erfindung besteht daher darin, einen stabilisierten Wabenkern zur Verfügung zu stellen, bei dem das Eindringen von Harz aus dem Bereich der Deckschichten während eines nachfolgenden Laminierprozesses minimiert ist.

Die Aufgabe wird durch ein Verfahren zum Stabilisieren eines Wabenkerns für ein Sandwich-Strukturbauteil, eine Vorrichtung zum Stabilisieren eines Wabenkerns für ein Sandwich-Strukturbauteil, und eine stabilisierte Kernlage für ein Sandwich-Strukturbauteil nach einem der unabhängigen Ansprüche erfüllt. Beispielhafte Ausführungsformen sind in den abhängigen Ansprüchen dargestellt.

Gemäß einem ersten Aspekt der Erfindung ist ein Verfahren zum Stabilisieren eines Wabenkerns für ein Sandwich-Strukturbauteil vorgesehen, das die folgenden Schritte aufweist. In einem ersten Schritt a) wird ein Wabenkern ausgelegt. In einem zweiten Schritt b) wird eine aushärtbare Klebeschicht auf wenigstens einer Seitenfläche des Wabenkerns aufgebracht. In einem dritten Schritt c) wird eine semipermeable Membran auf der wenigstens einen Seitenfläche aufgelegt, wobei die Membran gasdurchlässig und flüssigkeitsundurchlässig ist. In einem vierten Schritt d) wird im Wabenkern befindliche Luft durch die semipermeable Membran abgesaugt. In einem fünften Schritt e) erfolgt ein Aushärten der Klebeschicht. In einem weiteren Schritt f) erfolgt ein Entfernen der semipermeablen Membran.

Die Schritte d) und e) sind dabei beispielsweise wenigstens teilweise überlappend, d.h. sie werden zumindest teilweise gleichzeitig ausgeführt.

Der Wabenkern weist beispielsweise eine Vielzahl von wabenförmigen Öffnungen auf, die von Seitenwänden gebildet werden, welche sich in Richtung der Wabenkerndicke erstrecken. Der Wabenkern weist zum Beispiel eine flächige Erstreckung auf.

Die Klebeschicht weist beispielsweise wenigstens eine Lage Klebefilm auf.

Im zweiten Schritt wird die Klebeschicht auf den Stirnseiten der Wabenstruktur aufgebracht. Mit dem Begriff "Stirnseiten" werden die Seiten, bzw. Schnittflächen, der Waben in Dickenrichtung bezeichnet.

Die semipermeable Membran ist in Richtung von der Klebeschicht nach außen gasdurchlässig und flüssigkeitsundurchlässig. Die semipermeable Membran ist dabei insbesondere in der Richtung von innen nach außen luftdurchlässig und für das in der Klebeschicht enthaltene Klebematerial in flüssigem Zustand undurchlässig.

Gemäß einem Ausführungsbeispiel der Erfindung ist ein Verfahren vorgesehen, bei dem nach Schritt b) und vor Schritt c) ein Abreißgewebe auf der Klebeschicht aufgebracht wird, wobei in Schritt c) die Membran auf das Abreißgewebe aufgelegt wird.

Gemäß einem weiteren Ausführungsbeispiel wird nach Schritt c) eine Absaugschicht auf der semipermeablen Membran aufgelegt.

Die Absaugschicht kann beispielsweise ein Absaugvlies sein. Die Absaugschicht gewährleistet z.B. auch unter Einfluss von Druck, der beispielsweise durch Anlegen eines Vakuums erzeugt wird, eine derartig ausreichende Formstabilität, dass ein Lufttransport, bzw. ein Absaugen von Luft, in Längsrichtung, d.h. in Schichtrichtung möglich ist.

Gemäß einem weiteren Ausführungsbeispiel wird zwischen der Membran und dem Abreißgewebe eine luftdurchlässige Trennfolie angeordnet.

Beispielsweise weist die Trennfolie eine Perforation auf, zum Beispiel gleichmäßig über die Fläche verteilte kleine Öffnungen, z.B. kleiner als 1 mm.

Gemäß einem weiteren Ausführungsbeispiel der Erfindung ist auf der Absaugschicht eine luftundurchlässige Abdeckung angeordnet.

Die Abdeckung ist beispielsweise eine Absaugabdeckung.

Bei der Abdeckung kann es sich um eine Vakuumfolie oder um einen formstabilen Vakuumabschluss handeln.

Die luftundurchlässige Abdeckung ermöglicht das Anlegen eines Unterdrucks an einer oder mehreren Stellen, wobei sich aufgrund der Absaugschicht der angelegte Unterdruck mehr oder weniger gleichmäßig auf die Fläche verteilt, und damit auch gleichmäßig auf die semipermeable Membran wirken kann.

Die oberhalb und auch im folgenden beschriebenen Merkmale, bzw. Schritte können sowohl nur auf einer Seite eines Wabenkerns, als auch auf beiden Seiten des Wabenkerns vorgesehen sein.

Der Wabenkern kann z.B. beidseitig mit einer Klebeschicht versehen werden, d.h. der Schritt b) kann auf beiden Seiten des Wabenkerns vorgesehen sein.

Die semipermeable Membran kann beidseitig angeordnet werden und auf beiden Seiten können Maßnahmen zum Absaugen von Luft, bzw. eines gasförmigen Mediums, vorgesehen sein.

Beispielsweise kann das Abreißgewebe auf beiden Seiten des Wabenkerns vorgesehen werden.

Gemäß einem Beispiel wird eine erste Lage Klebefilm auf einer ersten Seitenfläche des Wabenkerns aufgebracht, der Wabenkern anschließend gedreht, und eine zweite Lage Klebefilm auf der zweiten Seite(nfläche) des Wabenkerns aufgebracht.

Beispielsweise wird eine erste semipermeable Membran auf der ersten Seite angeordnet.

Ein erstes Abreißgewebe kann auf der ersten Seite angeordnet werden.

Außerdem kann eine zweite semipermeable Membran auf der zweiten Seite angeordnet werden. Ein zweites Abreißgewebe kann dann ebenfalls auf der ersten Seite angeordnet werden.

Die unterschiedlichen Lagen können auf dem Wabenkern aufgebracht werden und mit dem Wabenkern in einem Werkzeug abgelegt werden, wobei das Werkzeug konturbildend für die eine Seite des Strukturbauteils ist.

Die Lagen können auch sukzessive in dem Werkzeug abgelegt werden, wobei selbstverständlich die Reihenfolge so erfolgt, dass nach dem Ablegen der Lagen die oberhalb beschriebene Strukturabfolge vorliegt. Anschließend kann die Lage mit dem Wabenkern eingelegt werden, woraufhin weitere Lagen, falls gewünscht, eingelegt werden können.

Gemäß einem weiteren Ausführungsbeispiel der Erfindung wird die wenigstens eine Lage Klebefilm durchgehend aufgebracht und vor dem Aushärten perforiert.

Unter "durchgehend" wird z.B. eine Klebefilmschicht verstanden, die keine Öffnungen in der Fläche aufweist.

Mit "durchgehend" kann auch eine einstückige Klebefilmschicht bezeichnet werden, d.h. eine Klebeschicht an einem Stück, z.B. von einer Rolle.

Für das Perforieren kann der Klebefilm beispielsweise mit dünnen Nadeln durchstochen werden.

Die Perforation erfolgt zum Beispiel gleichmäßig und über die Fläche verteilt.

Gemäß einem weiteren Ausführungsbeispiel der Erfindung wird die wenigstens eine Lage Klebefilm vor dem Aufbringen mit einer Perforation versehen und danach erst, bzw. anschließend aufgebracht.

Beispielsweise kann die Klebefilmlage auch vorperforiert werden und anschließend in aufgebrachtem zustand mit einer weiteren Perforation versehen werden.

Gemäß einem weiteren Ausführungsbeispiel der Erfindung wird die wenigstens eine Lage Klebefilm durch eine Nadelwalze perforiert.

Gemäß einem weiteren Ausführungsbeispiel der Erfindung ist ein Verfahren vorgesehen, bei dem durch die Löcher der Perforation vor dem Aushärten der Klebeschicht Luft abgesaugt wird. Dabei wird die Klebeschicht beim Aushärten zunächst flüssig, und die Löcher schließen sich beim Aushärten der Klebeschicht wieder.

Die Klebeschicht kann beispielsweise durch Erhitzen für das Aushärten zunächst flüssig werden und anschließend unter weiterer Temperatureinwirkung aushärten.

Anstelle der Wärmezufuhr für das Verflüssigen und Aushärten können auch andere Wirkungsmechanismen vorgesehen sein, z.B. ein Verflüssigen aufgrund eines chemischen Prozesses. Das Aushärten kann alternativ zu einer chemischen Reaktion unter Wärmezufuhr ebenfalls durch einen chemischen Prozess ohne Wärmezufuhr hervorgerufen werden. Selbstverständlich können die unterschiedlichen Abläufe auch kombiniert werden, z.B. Verflüssigen durch einen chemischen Prozess und Aushärten durch Erwärmung, oder Verflüssigen durch Erwärmung und Aushärten durch einen chemischen Prozess. Als weiteres Beispiel ist ein thermoplastisches Material vorgesehen, das durch Abkühlen ohne chemische Reaktion wieder fest wird.

Gemäß einem weiteren Ausführungsbeispiel der Erfindung weist die Klebeschicht wenigstens eine Klebefilmlage mit einer Trägerstruktur auf, wobei die Trägerstruktur eine derartig dichte, aber nicht vollkommen geschlossene Struktur aufweist, dass durch die Oberflächenspannungseffekte des Klebefilms auch bei zeitweise Verflüssigung des Klebefilms im Aushärtevorgang die Klebeschicht zusammengehalten wird, um die Tendenz zur Lochbildung in der Schicht zu minimieren.

Das Anliegen der Klebeschicht an der semipermeablen Membran während des Aushärtevorgangs kann das Schließen der Perforation der Klebeschicht unterstützen.

Gemäß einem weiteren Ausführungsbeispiel der Erfindung weist die Klebeschicht wenigstens einen Klebefilm auf, der bei Raumtemperatur folienartig ist und erst nach dem Aufheizen zeitweise flüssig ist.

Der Wabenkern besteht beispielsweise aus einem Kompositmaterial. Der Wabenkern kann aus Phenolharz-getränktem Aramidpapier, glasfaserverstärktem Papier, CFK-verstärktem Papier oder ähnlichem Material bestehen.

Gemäß einem weiteren Ausführungsbeispiel der Erfindung ist ein Verfahren vorgesehen, bei dem nach dem Aushärten in Schritt e) folgende Schritte vorgesehen sind: In einem ersten weiteren Schritt wird das Abreißgewebe entfernt. In einem zweiten weiteren Schritt wird eine Deckschicht auf wenigstens einer Seite des mit der Klebeschicht stabilisierten Wabenkerns angeordnet. Anschließend wird in einem dritten weiteren Schritt die Deckschicht in einem Laminiervorgang mit dem Wabenkern verbunden.

Auf der ersten Klebeschicht kann eine zweite Klebeschicht angeordnet werden.

Die Deckschicht kann ein Faserverbundwerkstoff aufweisen, bei dem Fasern in einem Matrixmaterial eingebettet sind.

Gemäß einem weiteren Ausführungsbeispiel der Erfindung umfasst der Laminiervorgang ein Aushärten des Matrixmaterials, wobei das Matrixmaterial der Deckschicht(en) beim Aushärten zunächst flüssig wird, und wobei die Klebeschicht ein Eindringen des Matrixmaterials in die Wabenkerne verhindert.

Das Einbringen wird beispielsweise weitestgehend, bzw. wenigstens teilweise verhindert. Das Eindringen wird jedenfalls reduziert, zum Beispiel in manchen Zellen komplett.

Gemäß einem zweiten Aspekt der Erfindung ist eine Vorrichtung zum Stabilisieren eines Wabenkerns für ein Sandwich-Strukturbauteil vorgesehen, das eine Aufnahmeeinrichtung zur Aufnahme eines Werkstücks und eine Vakuumeinrichtung zur Erzeugung eines Unterdrucks umfasst. In der Aufnahmeeinrichtung ist als Werkstück ein Wabenkern angeordnet, auf dem auf wenigstens einer Seite eine aushärtbare Klebeschicht aufgebracht ist. Eine semipermeable Membran ist vorgesehen, die gasdurchlässig und flüssigkeitsundurchlässig ist. Die Vakuumeinrichtung ist derart eingerichtet, um im Wabenkern befindliche Luft zumindest teilweise durch die semipermeable Membran abzusaugen.

Die Membran ist vom Inneren des Wabenkerns ausgehend jenseits der Klebeschicht angeordnet.

Zwischen der Klebeschicht und der Membran kann ein Abreißgewebe vorgesehen sein.

Auf der semipermeablen Membran kann eine Absaugschicht vorgesehen sein.

Die Vakuumeinrichtung kann eine luftundurchlässige Abdeckung aufweisen, die auf der Absaugschicht angeordnet ist.

Gemäß einem dritten Aspekt der Erfindung ist eine stabilisierte Kernlage für ein Sandwich-Strukturbauteil vorgesehen, das einen Wabenkern mit einer Vielzahl von wabenförmigen Zellen aufweist, die von Trennwänden voneinander getrennt sind, wobei sich die Trennwände in Richtung der Wabenkerndicke erstrecken. Außerdem weist die stabilisierte Kernlage wenigstens eine auf den Stirnseiten der Trennwände aufgebrachte Klebeschicht auf, wobei die Klebeschicht wenigstens eine ausgehärtete Klebfilmlage aufweist und die wabenförmigen Zellen wenigstens auf einer Seite derart verschließt, dass bei einem nachfolgenden Laminiervorgang mit einer harzgetränkten Deckschicht ein Eindringen von Harz reduziert ist. Die Klebeschicht weist dabei beispielsweise Öffnungen von maximal 0,1 mm Durchmesser auf, z.B. kleiner als 0,05 mm.

Die stabilisierte Kernlage kann außerdem mit einer oder zwei Deckschichten versehen sein, die mit dem Wabenkern über die Klebeschicht verbunden sind und aufgrund der Verbundwirkung zu einem Sandwich-Strukturbauteil führen. Die Deckschichten weisen beispielsweise einen Faserverbundwerkstoff auf, bei dem Fasermaterial in einem Matrixmaterial bzw. Harz eingebettet ist. Aufgrund der Klebeschicht mit den sehr kleinen Öffnungen ist das Eindringen von Harz bzw. Matrixmaterial weitestgehend verhindert, bzw. reduziert.

Die Kernlage kann an den Rändern mit einem sich verjüngenden Querschnitt auslaufen, z.B. mit einem rampenförmigen Auslauf, so dass beispielsweise ein schräger Übergang vom Sandwich-Bereich zu einem monolithischen Bereich vorliegt. Der rampenförmige Rand dient beispielsweise dazu, dass sich die Waben unter Druck bzw. Vakuum nicht seitlich zusammenschieben.

Gemäß einem weiteren Aspekt der Erfindung wird eine Wabenstruktur mit einer Klebeschicht zumindest einseitig verschlossen, wobei die semipermeable Membran ein Absaugen von Luft, insbesondere aus dem Bereich der Wabenhohlräume, ermöglicht. Mittels der semipermeablen Membran kann außerdem durch das Anlegen eines Unterdrucks das Ausbilden von einer porösen Klebeschicht vermieden werden, da das Vakuum bzw. der Unterdruck eventuell vorhandene Luftbläschen in der Klebeschicht absaugt. Durch das Anlegen eines Unterdrucks kann die Luft in dem Bereich der Wabenhohlräume so weit abgesaugt werden, dass es bei einem anschließenden Erwärmen, das für das Aushärten der Klebeschicht erforderlich sein kann, nicht zu einem Auswölben der Klebeschicht nach außen kommt, was zu einer unerwünschten Verformung der Oberflächenstruktur führen würde. Wenn im Gegensatz dazu das Volumen eines Wabenhohlraums aufgrund von bei Normaldruck vorliegendem "vollen" Volumenanteil komplett mit Luft gefüllt ist, tritt bei einer geschlossenen Klebeschicht beim Erwärmen während des Aushärtens ein Auswölben auf, was dazu führt, dass die Klebeschicht beim Aushärten nicht an der Wabenstruktur anliegt und keine oder nur eine schlechte Verbindung eingeht, was zu einer Schwächung des späteren Sandwichbauteils führen würde.

Die semipermeable Membran bietet folglich den Vorteil, dass sie einerseits verhindert, dass flüssiges Klebematerial aus der Klebeschicht nach außen abgesaugt werden kann, und andererseits ermöglicht, dass Luft aus den Wabenhohlräumen abgesaugt werden kann. Da bei dem Aushärtevorgang die Klebeschicht, zum Beispiel wenn sie vorher perforiert worden ist, z.B. aufgrund des Erwärmens zunächst flüssig wird, d.h. bevor sie aushärtet, und dadurch eine geschlossene Klebeschicht entsteht, kann selbst dann noch weiter Luft abgesaugt werden, da die Membran verhindert, dass flüssiges Klebeschichtmaterial durch die Membran beispielsweise hin zur Absaugrichtung gelangen kann. Jedenfalls führt der Unterdruck in den Wabenzellen dazu, dass beim Aushärten die durch das angelegte Vakuum wirkende Kraft ausreichend ist, um zu gewährleisten, dass die Klebeschicht nicht nach außen gewölbt erhärtet, sondern überall am Kern anliegt und eine gute Verbindung eingeht. Während des Aushärtens müssen daher keine zusätzlichen Kräfte mittels zusätzlicher Werkzeuge aufgebracht werden, um eine Formstabilität zu gewährleisten. An dieser Stelle sei auch auf ein späteres Aushärten im Rahmen eines Laminiervorgangs hingewiesen. Bei einer geschlossenen Klebeschicht ist in dem Wabenhohlraum eine bestimmte Luftmenge eingeschlossen. Bei einer entsprechend hohen Aufwärmung kann es dann natürlich zu einer Auswölbung der Klebeschicht kommen. Da während des Laminiervorgangs das Werkstück jedoch auch zusätzlich unter Druck gehalten wird, beispielsweise indem zwei entsprechende Werkzeughälften einen definierten Zwischenraum bilden oder das Bauteil unter von Außen wirkendem Überdruck im Autoklaven ausgehärtet wird, wird dem Auswölben jedoch entgegengewirkt.

Es sei darauf hingewiesen, dass die Merkmale der Ausführungsbeispiele und Aspekte der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf Ausführungsbeispiele der Erfindung eingegangen. Es zeigen:
- **Fig. 1**: ein Ausführungsbeispiel für ein Verfahren zum Stabilisieren eines Wabenkerns für ein Sandwich-Strukturbauteil gemäß der Erfindung;
- **Fig. 2 - 9**: weitere Ausführungsbeispiele für Verfahren gemäß der Erfindung;
- **Fig. 10**: ein Ausführungsbeispiel für eine Vorrichtung zum Stabilisieren eines Wabenkerns für ein Sandwich-Strukturbauteil gemäß der vorliegenden Erfindung;
- **Fig. 11a - 11b**: ein Ausführungsbeispiel für eine stabilisierte Kernlage für ein Sandwich-Strukturbauteil gemäß der vorliegenden Erfindung;
- **Fig. 12** - **14**: weitere Ausführungsbeispiele für stabilisierte Kernlagen gemäß der Erfindung.

Gemäß der vorliegenden Erfindung ist im Zusammenhang mit Wabenstrukturen, zum Beispiel aus Aramidpapier, zur Verwendung als Kernstruktur eines Leichtbau-Sandwich-Bauteils, vorgesehen diese Waben vor dem Laminierprozess der Deckhäute mit einer ausgehärteten Klebefilmschicht zu stabilisieren und abzudichten, um die Waben prozessstabiler zu machen und Harzfluss aus den Deckschichten in die Waben zu vermeiden. Mit Hilfe des im Folgenden beschriebenen Prozesses, d.h. der verschiedenen Ausführungsbeispiele des Verfahrens und der ebenfalls im folgenden beschriebenen Vorrichtungen, gelingt es, eine Klebefilmschicht in verstärktem Maße dicht und nahezu lochfrei zu erzeugen, so dass der Harzfluss in wesentlich besserem Maße verhindert werden kann, was zu einer besseren Bauteilqualität, einem stabileren Herstellungsprozess und einer geringeren Ausschussrate führt.

Unter dem Begriff "Wabenkern" werden im Rahmen der vorliegenden Erfindung auch andere Strukturen verstanden, bei denen in Richtung der Dicke eine Vielzahl von Trennwänden oder Stege angeordnet sind, zwischen denen sich Hohlräume befinden. Die Hohlräume können dabei durchgehend oder unterbrochen, d.h. nur einseitig offen ausgebildet sein. Die Zell- oder Trennwände bzw. Stege verlaufen beispielsweise senkrecht zur Plattenoberfläche oder auch schräg zur Plattenoberfläche, d.h. mit einem von 90° abweichenden Winkel. Die Hohlräume können dabei auch mit Füllmaterial gefüllt sein, z.B. zu Dämmzwecken oder Schallabsorptionszwecken. Insbesondere werden unter "Wabenkern" auch Gittermaterialien verstanden, die durch Anbringen wenigstens einer Klebeschicht stabilisiert bzw. verstärkt werden, um anschließend für die Herstellung eines Sandwichbauteils leichter handhabbar zu sein.

Gemäß einem Aspekt der Erfindung ist vorgesehen, dass sich auf der Wabe eine oder mehrere Lagen Klebefilm befinden und darauf eine Lage Abreißgewebe vorgesehen sein kann. Darauf wird nun eine semipermeable Membran gelegt, die für Luft, nicht aber für Flüssigkeiten durchlässig ist. Über der Membran kann dann noch ein Absaugvlies vorgesehen, bzw. dort abgelegt sein. Dadurch kann die Luft abgesaugt werden, ohne dass Klebefilm in das Absaugvlies wegläuft. Unterstützend kann vor dem Aushärteprozess der Klebefilm mit dünnen Nadeln durchstochen werden, damit im kalten Zustand Luft aus der Wabe abgesaugt werden kann. Beim Aushärten wird der Klebefilm zunächst flüssig und die eingebrachten kleinen Perforationen schließen sich unter der Membran wieder. Zusätzlich kann ein Klebefilm mit einer dichten, engmaschigen Trägerstruktur verwendet werden.

Durch den neuen Prozessaufbau und die damit verbundenen Vorrichtungen kann die Luft zu Beginn des Prozesses, wenn der Klebefilm noch kalt, bzw. relativ fest ist, aus der Wabe durch die Durchstiche im Klebefilm und die semipermeable Membran abgesaugt werden. Nach der zeitweiligen Verflüssigung des Klebefilms, z.B. durch Aufheizen, schließen sich die Stiche im Klebefilm wieder, ein Teil des Klebestoffs fließt in das Abreißgewebe, die Membran stoppt aber ein weiteres Ausfließen von Klebestoff. Nach dem Aushärten des Klebefilms wird eine gut an der Wabe haftende Klebefilmschicht erzeugt, die keine oder allenfalls sehr minimale, sogenannte *Pinholes* (Löcher) aufweist. Damit fließt in einem Folgeprozess, d.h. z.B. bei einem Laminieren der Deckschichten des SandwichBauteils, weniger Harz in die Wabe und die Deckschichten weisen einen konstanteren Faservolumengehalt und eine geringere Porosität auf.

An dieser Stelle sei darauf hingewiesen, dass das Vorsehen einer Perforation in dem Klebefilm die Vorteile gemäß der vorliegenden Erfindung zwar unterstützt, bzw. verbessert, dass das erfindungsgemäße Verfahren jedoch auch ohne diese Perforation möglich ist. Dies trifft ebenfalls auf das Verwenden eines Abreißgewebes zu, das gemäß der vorliegenden Erfindung zwar vorteilhaft, jedoch nicht unbedingt notwendig ist.

Gemäß der Erfindung können beispielsweise auch mehrere Klebefilme, beispielsweise mit unterschiedlicher Trägerstruktur, verwendet werden.

Gemäß der Erfindung wird eine Kernstruktur für ein Sandwichbauteil zur Verfügung gestellt, die außen von möglichst dichten, ausgehärteten Klebefilmlagen beschichtet, bzw. abgeschlossen ist. In einem nachgeschalteten Laminierprozess der Decklagen ist so die Wabe stabiler gegen Verformungen und vor allem fließt kein, oder zumindest weniger, Harz aus den Deckschichten in die Kernstruktur, bzw. es kommt weniger Luft aus dem Kern in die Deckschichten, wo sie Porosität erzeugen können. Die Klebeschicht, insbesondere bei beidseitiger Ausführung, verhindert außerdem z.B. auch, dass sich der Wabenkern in einem Laminiervorgang unter dem dabei in der Regel angewandten Druck verformt.

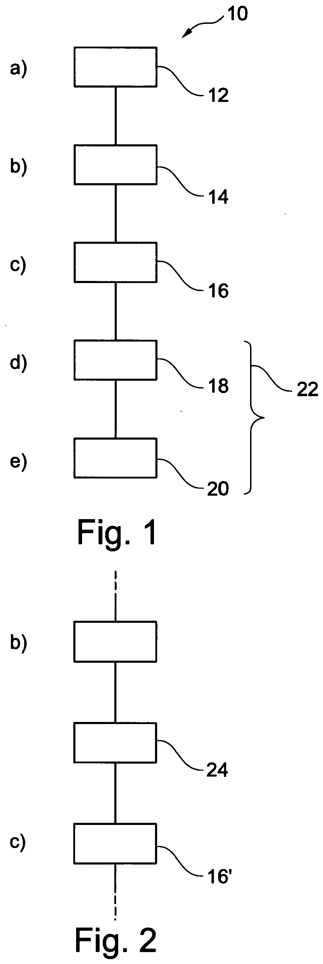

Fig. 1 zeigt ein Verfahren 10 zum Stabilisieren eines Wabenkerns für ein Sandwich-Strukturbauteil, bei dem folgende Schritte vorgesehen sind: In einem ersten Schritt 12 wird ein Wabenkern ausgelegt: In einem zweiten Schritt 14 wird eine aushärtbare Klebeschicht auf wenigstens einer Seitenfläche des Wabenkerns aufgebracht. In einem dritten Schritt 16 wird eine semipermeable Membran auf der wenigstens einen Seitenfläche aufgelegt, wobei die Membran gasdurchlässig und flüssigkeitsundurchlässig ist. In einem vierten Schritt 18 wird im Wabenkern befindliche Luft durch die semipermeable Membran abgesaugt. In einem fünften Schritt 20 härtet die Klebeschicht aus.

Der erste Schritt 12 wird auch als Schritt a) bezeichnet, der zweite Schritt 14 als Schritt b), der dritte Schritt 16 als Schritt c), der vierte Schritt 18 als Schritt d), und der fünfte Schritt 20 als Schritt e).

Wie in Fig. 1 durch eine Klammer 22 angedeutet, können das Absaugen im vierten Schritt 18 und das Aushärten im fünften Schritt 20 in zumindest teilweise überlappender Art und Weise erfolgen.

Gemäß dem in Fig. 2 gezeigten weiteren Ausführungsbeispiel ist nach Schritt b) und vor Schritt c) ein weiterer Schritt 24 vorgesehen, bei dem ein Abreißgewebe auf der Klebeschicht aufgebracht wird, wobei in Schritt c) die Membran auf das Abreißgewebe aufgelegt wird, was in Fig. 2 mit Bezugsziffer 16' angedeutet ist.

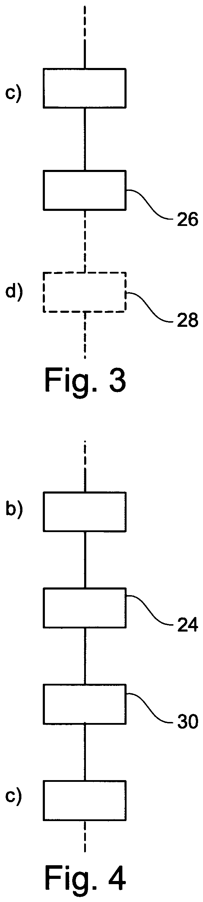

Nach Schritt c) kann in einem folgenden Schritt 26, wie in Fig. 3 gezeigt, eine Absaugschicht auf der semipermeablen Membran aufgelegt werden. Beispielsweise handelt es sich bei der Absaugschicht um ein Absaugvlies. Anschließend können die bereits in Fig. 1 dargestellten Schritte erfolgen, so wie auch andere Ausführungsvarianten, bzw. eine Kombination mit anderen Merkmalen, die in den folgenden Figuren beispielhaft beschrieben werden. Diese Kombinierbarkeit ist in Fig. 3 schematisch durch gestrichelte Linien 28 angedeutet.

Gemäß dem in Fig. 4 gezeigten Ausführungsbeispiel wird in einem Zwischenschritt 30 zwischen der Membran und dem Abreißgewebe eine luftdurchlässige Trennfolie angeordnet.

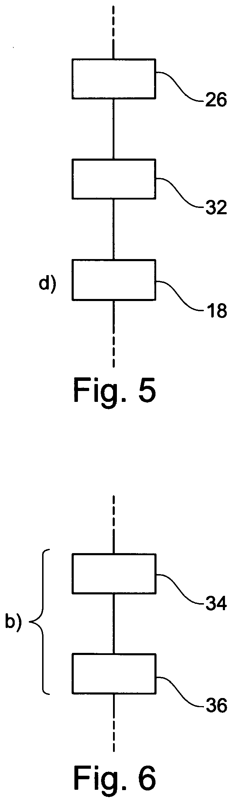

Wie in Fig. 5 gezeigt ist, kann für das Absaugen im vierten Schritt 18 eine luftundurchlässige Abdeckung auf der Absaugschicht angeordnet werden, wozu ein weiterer Zwischenschritt 32 zwischen dem Auflegen der Absaugschicht in Schritt 26 und dem Absaugen in Schritt 18 gezeigt ist. Bei der Abdeckung handelt es sich beispielsweise um eine Absaugabdeckung, bzw. Vakuumfolie. Die luftdichte Folie, unter der die Luft zwischen Folie und Form abgesaugt wird, wird zusammen mit dem unter dem Werkstück befindlichen Werkzeug (die feste Form zur Konturgebung wird auch als *Tooling* bezeichnet) auch als Vakuumsack bezeichnet.

Alternativ zu einer Vakuumfolie kann auch eine formstabile Absaugvorrichtung mit der semipermeablen Membran in Kontakt gebracht werden, wobei die Absaugvorrichtung beispielsweise eine Vielzahl von kleineren Absaugöffnungen aufweist, um auf die semipermeable Membran einen gleichmäßigen, oder zumindest überwiegend gleichmäßigen Unterdruck aufbringen zu können, um Luft abzusaugen. Dieses Ausführungsbeispiel ist jedoch in den Figuren nicht näher gezeigt.

Die Absaugvorrichtung kann beispielsweise auch mit der Absaugschicht kombiniert werden.

In dem zweiten Schritt 14, d.h. Schritt b), kann, wie in Fig. 6 gezeigt, die wenigstens eine Lage Klebefilm in einem ersten Teilschritt 34 durchgehend aufgebracht werden und in einem zweiten Teilschritt 36 vor dem Aushärten perforiert werden. Für das Perforieren kann der Klebefilm beispielsweise mit dünnen Nadeln durchstochen werden.

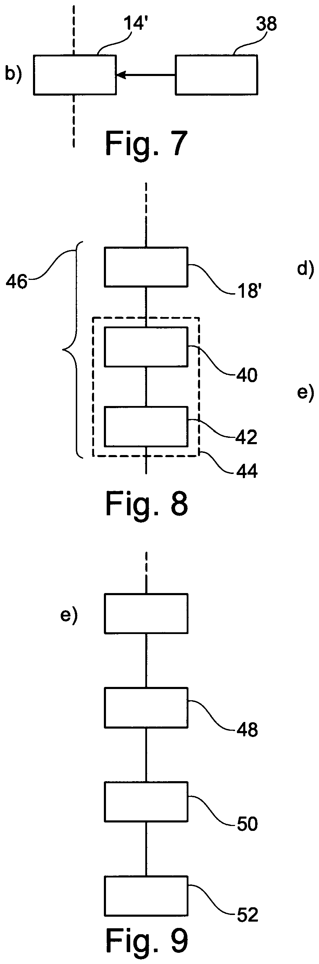

Wie in Fig. 7 dargestellt ist, kann die wenigstens eine Lage Klebefilm vor dem Aufbringen in einem Perforationsschritt 38 mit einer Perforation versehen werden und anschließend in Schritt b) aufgebracht werden, was mit Bezugsziffer 14' angedeutet ist.

Beispielsweise kann die wenigstens eine Lage Klebefilm durch eine Nadelwalze perforiert werden (nicht näher gezeigt).

Wie in Fig. 8 dargestellt ist, kann in einem Absaugschritt 18' durch die Löcher der Perforation vor dem Aushärten der Klebeschicht Luft abgesaugt werden, wobei die Klebeschicht beim Aushärten in einem ersten Aushärte-Teilschritt 40 zunächst flüssig wird und sich die Löcher beim Aushärten der Klebeschicht in einem zweiten Aushärte-Teilschritt 42 wieder schließen. In Fig. 8 ist mit einem die beiden Aushärte-Teilschritte 40, 42 umgreifenden gestrichelten Rechteck 44 angedeutet, dass die beiden Aushärte-Teilschritte im Rahmen des Aushärteschritts 20 erfolgen, wobei hier ebenfalls durch eine verbindende Klammer 46 angedeutet ist, dass das Absaugen der Luft in Schritt 18', bzw. Schritt d) zumindest teilweise mit dem Aushärtevorgang, bzw. Schritt e) überlappend erfolgen können.

In Fig. 9 ist ein weiteres Ausführungsbeispiel eines erfindungsgemäßen Verfahrens gezeigt, bei dem nach dem Aushärten in Schritt e) ein erster zusätzlicher Schritt 48 vorgesehen ist, in dem das Abreißgewebe entfernt wird. In einem zweiten zusätzlichen Schritt 50 wird eine Deckschicht auf wenigstens einer Seite des mit Klebeschicht stabilisierten Wabenkerns angeordnet. In einem dritten zusätzlichen Schritt 52 wird die Deckschicht in einem Laminiervorgang mit dem Wabenkern verbunden.

Die Deckschicht weist beispielsweise einen Faserverbundwerkstoff auf, bei dem Fasern in einem Matrixmaterial eingebettet sind.

Der Laminiervorgang umfasst beispielsweise auch ein Aushärten des Matrixmaterials, wobei das Matrixmaterial beim Aushärten zunächst flüssig wird und wobei die Klebeschicht ein Eindringen des Matrixmaterials in die Wabenkerne unterbindet bzw. weitestgehend verhindert, z.B. auf ein Minimum reduziert, was jedoch nicht näher dargestellt ist.

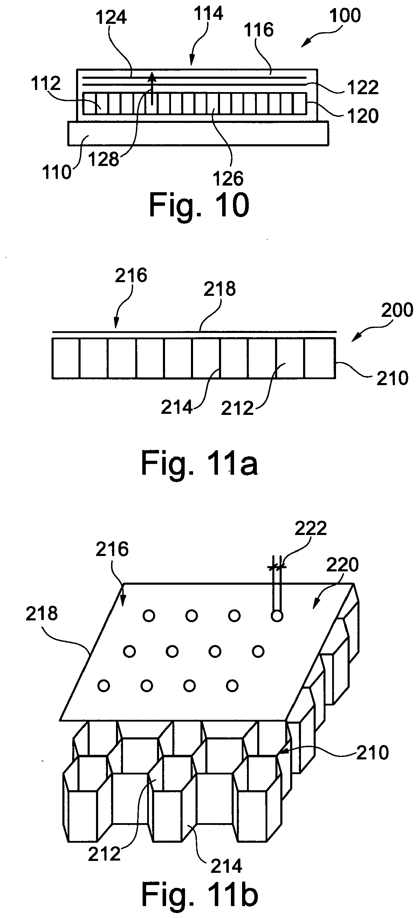

Gemäß der vorliegenden Erfindung ist auch eine Vorrichtung 100 zum Stabilisieren eines Wabenkerns für ein Sandwich-Strukturbauteil vorgesehen, die eine Aufnahmeeinrichtung 110 zur Aufnahme eines Werkstücks 112 aufweist. Außerdem ist eine Vakuumeinrichtung 114 zur Erzeugung eines Unterdrucks 116 vorgesehen. In der Aufnahmeeinrichtung 110 ist als Werkstück ein Wabenkern 120 angeordnet, auf dem auf wenigstens einer Seite eine aushärtbare Klebeschicht 122 angeordnet bzw. aufgebracht ist. In Fig. 10 ist die Klebeschicht 122 mit Abstand zum Wabenkern 120 dargestellt, um zu verdeutlichen, dass diese Schicht eine separate Schicht ist, die auf dem Wabenkern aufgebracht ist. Mit anderen Worten, der dazwischen befindliche Abstand dient nur der besseren Lesbarkeit und weist nicht auf einen tatsächlichen Abstand hin. Erfindungsgemäß ist eine semipermeable Membran 124 vorgesehen, die gasdurchlässig und flüssigkeitsundurchlässig ist. Die Vakuumeinrichtung 114 ist eingerichtet, im Wabenkern befindliche Luft, angedeutet mit Bezugsziffer 126, zumindest teilweise durch die semipermeable Membran abzusaugen, was mit einem Pfeil 128 angedeutet ist.

Die semipermeable Membran 124 ist beispielsweise auf der Klebeschicht 122 angeordnet. Zwischen der Klebeschicht 122 und der Membran 124 können aber auch weitere Schichten vorgesehen sein, wie z.B. eine Schicht mit einem Abreißgewebe. Insbesondere können die Schichten vorgesehen sein, die oberhalb im Zusammenhang mit den Ausführungsvarianten des Verfahrens beschrieben sind.

Wie Fig. 11a und 11b schematisch angedeutet, ist gemäß der vorliegenden Erfindung auch eine stabilisierte Kernlage 200 vorgesehen. Die stabilisierte Kernlage 200 für ein Sandwich-Strukturbauteil weist einen Wabenkern 210 mit einer Vielzahl von wabenförmigen Zellen 212 auf, die von Trennwänden 214 voneinander getrennt sind, wobei sich die Trennwände in Richtung der Wabenkerndicke erstrecken. Fig. 11a zeigt einen Querschnitt durch die stabilisierte Kernlage 200, und Fig. 11b zeigt in einer perspektivischen Draufsicht den Aufbau, wobei im vorderen Bereich zur besseren Lesbarkeit der Wabenkern 210 alleine dargestellt ist.

Gemäß der Erfindung ist wenigstens eine auf den Stirnseiten der Trennwände aufgebrachte Klebeschicht 216 vorgesehen, wobei die Klebeschicht wenigstens eine ausgehärtete Klebfilmlage 218 aufweist. In Fig. 11a ist die Klebefilmlage 218 aus Gründen der besseren Lesbarkeit mit Abstand zum darunter befindlichen Wabenkern 210 dargestellt. Es sei darauf hingewiesen, dass die Klebefilmlage 218 direkt auf die Stirnseiten der Trennwände, d.h. ohne Abstand, aufgebracht ist. Die Klebefilmlage 218 verschließt die wabenförmigen Zellen 212 wenigstens auf einer Seite derart, dass bei einem nachfolgenden Laminiervorgang mit einer harzgetränkten Deckschicht (in Fig. 11a nicht näher gezeigt) ein Eindringen von Harz reduziert ist. Dazu weist die Klebeschicht Öffnungen 220 auf, die maximal einen Durchmesser 222 von 0,1 mm haben.

Die Kernlage ist in der Figur mit einem geraden Rand ausgebildet, der im Profil quer bzw. senkrecht zur Fläche verläuft.

Gemäß einem weiteren, nicht gezeigten Beispiel kann an den Rändern ein sich verjüngender Querschnitt vorgesehen sein, mit dem der Wabenkern sozusagen ausläuft, z.B. mit einem rampenförmigen Auslauf. Damit kann beispielsweise ein schräger Übergang vom Sandwich-Bereich zu einem monolithischen Bereich erreicht werden. Der verjüngende, z.B. rampenförmige Rand kann verhindern, dass sich die Waben unter Druck bzw. Vakuum seitlich zusammenschieben.

In einem weiteren Ausführungsbeispiel (nicht näher gezeigt) ist auch auf der anderen Seite(nfläche) des Wabenkerns eine Klebeschicht 216 vorgesehen, die dort ebenfalls die wabenförmigen Zellen wie oberhalb beschrieben verschließt

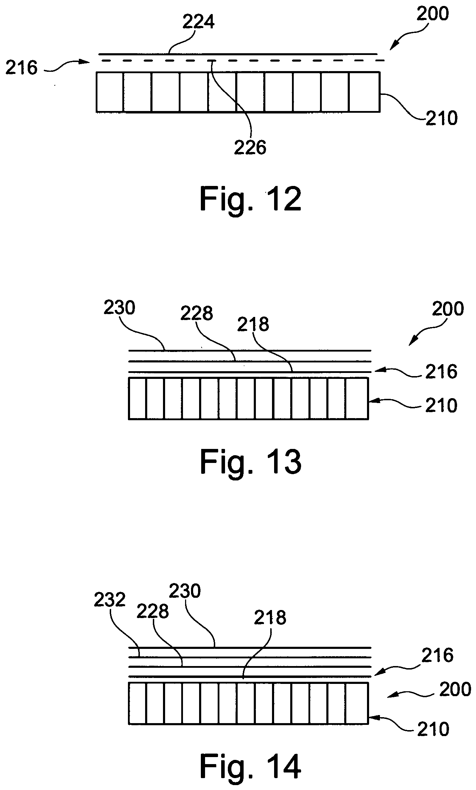

In Fig. 12 ist ein weiteres Ausführungsbeispiel der stabilisierten Kernlage 200 gezeigt. Die Klebeschicht 216 weist wenigstens eine Klebefilmlage 224 mit einer Trägerstruktur 226 auf. Die Trägerstruktur weist eine derartig dichte, aber nicht vollkommen geschlossene Struktur auf, dass durch die Oberflächenspannungseffekte des Klebefilms auch bei zeitweise Verflüssigung des Klebefilms im Aushärtevorgang die Klebeschicht zusammengehalten wird, um die Tendenz zur Lochbildung in der Schicht zu minimieren.

Es sei darauf hingewiesen, dass die Anordnung der Trägerstruktur 226 in Richtung des Wabenkerns 210 ein erstes Ausführungsbeispiel darstellt. In einem weiteren, nicht gezeigten Ausführungsbeispiel ist die Anordnung genau umgekehrt, d.h. die Klebefilmlage 224 ist in Richtung des Wabenkerns 210 angeordnet, und die Trägerstruktur 226, mit Bezug auf Fig. 12, darüber.

Gemäß einem weiteren Beispiel wird der Klebefilm mit der Trägerschicht als Verbund geliefert. Das Trägermaterial erlaubt eine bessere Handhabbarkeit des Klebfilms, um ein Reißen oder Verformen zu vermeiden.

Beispielsweise können zwei Klebefilmlagen verwendet werden, z.B. eine mit einer gröberen, offeneren Trägerstruktur und viel Klebstoff, und eine Lage mit einer feineren, dichteren Trägerstruktur, aber weniger Harz.

Fig. 13 zeigt ein weiteres Ausführungsbeispiel der stabilisierten Kernlage 200, bei der auf der Klebeschicht 218 ein Abreißgewebe 228 angeordnet ist. Auf dem Abreißgewebe 228 ist eine Membran 230 angeordnet, wobei die Membran 230 eine Semipermeabilität aufweist und gasdurchlässig und flüssigkeitsundurchlässig ist, wie oberhalb im Zusammenhang mit den diversen Ausführungsbeispielen für ein Verfahren gemäß der Erfindung beschrieben. Bei dem in Fig. 13 gezeigten Ausführungsbeispiel der stabilisierten Kernlage 200 sind die einzelnen Schichten, wie auch im Zusammenhang mit den anderen Figuren erwähnt, mit Abstand zueinander gezeigt, um eine bessere Lesbarkeit der Figur zu gewährleisten. In Wirklichkeit sind die einzelnen Schichten aneinander anliegend, bzw. aufeinander klebend.

Bei dem in Fig. 13 gezeigten Ausführungsbeispiel handelt es sich um ein Zwischenprodukt, bei dem die semipermeable Membran 230 noch mit der stabilisierten Kernlage, d.h. dem Wabenkern 210 und der Klebeschicht 216 verbunden ist. Die Membran 230 kann für das Verbinden der stabilisierten Kernlage mit einer nicht weiter gezeigten Deckschicht durch einfaches Abreißen von der Klebeschicht 216 entfernt werden, wozu das Abreißgewebe 228 vorgesehen ist. Durch ein solches Abreißen kann beispielsweise auch die Klebeschicht 216 derart aktiviert werden, dass die nach dem Abreißen der Membran 230 entstehende Oberfläche mit einer darauf anzubringenden Deckschicht eine klebende Verbindung eingehen kann.

Beispielsweise kann auf der so entstehenden Oberfläche auch eine weitere Klebeschicht angebracht werden. Dadurch lässt sich das Verbindung mit einer aufzubringende Decklage noch weiter optimieren. Die weitere Klebeschicht kann dabei auf der einen Seite an die Verbindung mit der Klebeschichtoberfläche angepasst sein und auf der anderen Seite an die Verbindung mit der aufzubringenden Decklage.

In Fig. 14 ist ein weiteres Ausführungsbeispiel für eine stabilisierte Kernlage 200 gezeigt. Hier ist ebenfalls auf der Klebefilmlage 218 der Klebeschicht 216 das Abreißgewebe 228 vorgesehen. Außerdem ist auch die semipermeable Membran 230 vorgesehen. Zwischen der Membran 230 und dem Abreißgewebe 228 ist jedoch noch eine luftdurchlässige Trennfolie 232 vorgesehen.

Die zusätzliche luftdurchlässige Trennfolie 232 ermöglicht das Entfernen der Membran 230 nach erfolgreichem Absaugen und Aushärten der Klebeschicht 216. Anschließend liegt ein Zwischenprodukt vor, bei dem die Kernlage 200 ein Wabenkern 210 mit einer Klebeschicht 216 aufweist, auf der sich das Abreißgewebe 228 befindet. Die Membran 230 ist dann mit Hilfe der Trennlage bzw. Trennfolie 232 bereits schon entfernt. Um nun die Klebeschicht 216 zu aktivieren, beispielsweise für einen Laminiervorgang, kann dann das Abreißgewebe 228 verwendet werden.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer, oben beschriebener Ausführungsbeispiele und Aspekte verwendet werden können. Bezugszeichen in den Ansprüchen sind nicht als Einschränkung anzusehen.

## Patentansprüche

1. Verfahren (10) zum Stabilisieren eines Wabenkerns für ein Sandwich Strukturbauteil, umfassend die folgenden Schritte:
a) Auslegen (12) eines Wabenkerns;
b) Aufbringen (4) einer aushärtbaren Klebeschicht auf wenigstens einer Seitenfläche des Wabenkerns;
c) Auflegen (16) einer semipermeablen Membran auf der wenigstens einen Seitenfläche; wobei die Membran gasdurchlässig und flüssigkeitsundurchlässig ist;
d) Absaugen (18) von im Wabenkern befindlicher Luft durch die semipermeable Membran; und
e) Aushärten (20) der Klebeschicht;
f) Entfernen (48) der semipermeablen Membran.

2. Verfahren nach Anspruch 1, bei dem nach Schritt b) und vor Schritt c) ein Abreißgewebe auf der Klebeschicht aufgebracht wird (24);
wobei in Schritt c) die Membran auf das Abreißgewebe aufgelegt wird (16').

3. Verfahren nach Anspruch 1 oder 2, bei dem nach Schritt c) eine Absaugschicht auf der semipermeablen Membran aufgelegt wird (26).

4. Verfahren nach Anspruch 2 oder 3, bei dem zwischen der Membran und dem Abreißgewebe eine luftdurchlässige Trennfolie angeordnet wird (30).

5. Verfahren nach Anspruch 3 oder 4, bei dem eine luftundurchlässige Abdeckung auf der Absaugschicht angeordnet wird (32).

6. Verfahren nach einem der vorhergehenden Ansprüche, bei dem die wenigstens eine Lage Klebefilm durchgehend aufgebracht (34) wird und vor dem Aushärten perforiert wird (36).

7. Verfahren nach einem der vorhergehenden Ansprüche, bei dem die wenigstens eine Lage Klebefilm vor dem Aufbringen mit einer Perforation versehen wird (38) und anschließend aufgebracht wird (14).

8. Verfahren nach Anspruch 6 oder 7, bei dem die wenigstens eine Lage Klebefilm durch eine Nadelwalze perforiert wird.

9. Verfahren nach einem der Ansprüche 6 bis 8, bei dem durch die Löcher der Perforation vor dem Aushärten der Klebeschicht Luft abgesaugt wird (18');
wobei die Klebeschicht beim Aushärten zunächst flüssig wird (40); und wobei sich die Löcher beim Aushärten der Klebeschicht wieder schließen (42).

10. Verfahren nach einem der vorhergehenden Ansprüche, bei dem die Klebeschicht wenigstens eine Klebefilmlage (224) mit einer Trägerstruktur (226) aufweist;
wobei die Trägerstruktur eine derartig dichte, aber nicht vollkommen geschlossene Struktur aufweist, dass durch die Oberflächenspannungseffekte des Klebefilms auch bei zeitweise Verflüssigung des Klebefilms im Aushärtevorgang die Klebeschicht zusammengehalten wird, um die Tendenz zur Lochbildung in der Schicht zu minimieren.

11. Verfahren nach einem der vorhergehenden Ansprüche, wobei die
Klebeschicht wenigstens einen Klebelfilm aufweist, der bei Raumtemperatur folienartig ist und erst nach dem Aufheizen zeitweise flüssig ist.

12. Verfahren nach einem der vorhergehenden Ansprüche, bei dem nach dem Aushärten in Schritt e) folgende Schritte vorgesehen sind:
- Entfernen (48) des Abreißgewebes;
- Anordnen (50) einer Deckschicht auf wenigstens einer Seite des mit der Klebeschicht stabilisierten Wabenkerns; und
- Verbinden (52) der Deckschicht in einem Laminiervorgang mit dem Wabenkern.

13. Verfahren nach einem der vorhergehenden Ansprüche, bei dem der Laminiervorgang ein Aushärten des Matrixmaterials umfasst;
wobei das Matrixmaterial beim Aushärten zunächst flüssig wird; und wobei die Klebeschicht ein Eindringen des Matrixmaterials in die Wabenkerne verhindert.

14. Vorrichtung (100) zum Stabilisieren eines Wabenkerns für ein Sandwich Strukturbauteil, mit:
- einer Aufnahmeeinrichtung (110) zur Aufnahme eines Werkstücks (112); und
- einer Vakuumeinrichtung (114) zur Erzeugung eines Unterdrucks (116); wobei in der Aufnahmeeinrichtung als Werkstück ein Wabenkern (120) angeordnet ist, auf dem auf wenigstens einer Seite eine aushärtbare Klebeschicht (122) aufgebracht ist;
wobei eine semipermeable Membran (124) vorgesehen ist, die gasdurchlässig und flüssigkeitsundurchlässig ist; wobei die Vakuumeinrichtung eingerichtet ist, im Wabenkern befindliche Luft (126) zumindest teilweise durch die semipermeable Membran abzusaugen (128), wobei die semipermeable Membran nach dem Aushärten der Klebeschicht entfernt wird.

15. Stabilisierte Kernlage (200) für ein Sandwich-Strukturbauteil, die nach den Verfahrensschritten gemäß Anspruch 1 hergestellt wird, aufweisend:
- einen Wabenkern (210) mit einer Vielzahl von wabenförmigen Zellen (212), die von Trennwänden (214) voneinander getrennt sind; wobei sich die Trennwände in Richtung der Wabenkerndicke erstrecken; und
- wenigstens eine auf den Stirnseiten der Trennwände aufgebrachte Klebeschicht (216); wobei die Klebeschicht wenigstens eine ausgehärtete Klebefilmlage (218) aufweist und die wabenförmigen Zellen wenigstens auf einer Seite derart verschließt, dass bei einem nachfolgenden Laminiervorgang mit einer harzgetränkten Deckschicht ein Eindringen von Harz reduziert ist; und wobei die Klebeschicht Öffnungen (220) von maximal 0,1 mm Durchmesser (222) aufweist.

## Claims

1. Process (10) for the stabilization of a honeycomb core for a sandwich structural component, comprising the following steps:
a) provision (12) of a honeycomb core;
b) application (4) of a hardenable adhesive layer on at least one side of the honeycomb core;
c) placing (16) of a semipermeable membrane on the at least one side; the membrane being gas-permeable and liquid-impermeable;
d) removal (18) by suction, through the semipermeable membrane, of air located in the honeycomb core; and
e) hardening (20) of the adhesive layer;
f) removal (48) of the semipermeable membrane.

2. Process according to Claim 1, in which after step b) and before step c) a peel ply is applied (24) on the adhesive layer;
the membrane being placed (16') in step c) onto the peel ply.

3. Process according to Claim 1 or 2, in which after step c) a suction layer is placed (26) on the semipermeable membrane.

4. Process according to Claim 2 or 3, in which an air-permeable release film is arranged (30) between the membrane and the peel ply.

5. Process according to Claim 3 or 4, in which an air-impermeable covering is arranged (32) on the suction layer.

6. Process according to any of the preceding claims, in which the at least one layer of adhesive film has no apertures when it is applied (34) and is perforated (36) before the hardening procedure.

7. Process according to any of the preceding claims, in which perforation is provided (38) to the at least one layer of adhesive film before the application procedure, and then the said film is applied (14).

8. Process according to Claim 6 or 7, in which the at least one layer of adhesive film is perforated by a pin roller.

9. Process according to any of Claims 6 to 8, in which air is removed (18') by suction through the holes of the perforation before the hardening of the adhesive layer;
the adhesive layer initially becoming liquid (40) during the hardening procedure; and the holes in turn being closed (42) during the hardening of the adhesive layer.

10. Process according to any of the preceding claims, in which the adhesive layer comprises at least one adhesive film layer (224) with a supportive structure (226) ;
the supportive structure being, although not completely impermeable, a closed structure that is dense to the extent that even when the adhesive film is temporarily liquefied during the hardening procedure the adhesive layer is held together via the surface-tension effects of the adhesive film, with resultant minimization of the tendency toward formation of holes in the layer.

11. Process according to any of the preceding claims, where the adhesive layer comprises at least one adhesive film that behaves as a film at room temperature and is temporarily liquid only after heating.

12. Process according to any of the preceding claims, in which after the hardening procedure in step e) the following steps are provided:
- removal (48) of the peel ply;
- arrangement (50) of an outer layer on at least one side of the honeycomb core stabilized by the adhesive layer; and
- bonding (52) of the outer layer to the honeycomb core in a lamination procedure.

13. Process according to any of the preceding claims, in which the lamination procedure comprises hardening of the matrix material;
the matrix material initially becoming liquid during the hardening procedure; and the adhesive layer preventing penetration of the matrix material into the honeycomb cores.

14. Device (100) for the stabilization of a honeycomb core for a sandwich structural component, with:
- acceptance equipment (110) for accepting a workpiece (112); and
- vacuum equipment (114) for generating a reduced pressure (116); there being arranged as workpiece in the acceptance equipment a honeycomb core (120) on which there is a hardenable adhesive layer (122) applied on at least one side;
there being a semipermeable membrane (124) provided which is gas-permeable and liquid-impermeable; the vacuum equipment being configured to remove (128), by suction, air (126) located in the honeycomb core at least to some extent through the semipermeable membrane, the semipermeable membrane being removed after the hardening of the adhesive layer.

15. Stabilized core layer (200) which is intended for a sandwich structural component and which is produced by the steps as per Claim 1, comprising:
- a honeycomb core (210) with a large number of honeycomb-shaped cells (212) separated from one another by partitions (214); the partitions extending in the direction of the thickness of the honeycomb core; and
- applied on the edges of the partitions, at least one adhesive layer (216); the adhesive layer comprising at least one hardened adhesive film layer (218) and the said layer closing the honeycomb-shaped cells at least on one side in a manner such that during a subsequent lamination procedure using a resin-impregnated outer layer there is reduced ingress of resin; and the adhesive layer having apertures (220) of diameter (222) at most 0.1 mm.

## Revendications

1. Procédé (10) pour la stabilisation d'un noyau alvéolaire pour une pièce de structure en sandwich, comprenant les étapes suivantes :
a) étalement (12) d'un noyau alvéolaire ;
b) application (4) d'une couche adhésive durcissable sur au moins une face latérale du noyau alvéolaire ;
c) application (16) d'une membrane semi-perméable sur ladite au moins une face latérale ; la membrane étant perméable aux gaz et imperméable aux liquides ;
d) absorption (18) de l'air se trouvant dans le noyau alvéolaire à travers la membrane semi-perméable ; et
e) durcissement (20) de la couche adhésive ;
f) élimination (48) de la membrane semi-perméable.

2. Procédé selon la revendication 1, dans lequel, après l'étape b) et avant l'étape c), un tissu d'arrachage est appliqué (24) sur la couche adhésive ; la membrane étant appliquée (16') sur le tissu d'arrachage lors de l'étape c).

3. Procédé selon la revendication 1 ou 2, dans lequel, après l'étape c), une couche d'absorption est appliquée (26) sur la membrane semi-perméable.

4. Procédé selon la revendication 2 ou 3, dans lequel une feuille de séparation perméable à l'air est disposée (30) entre la membrane et le tissu d'arrachage.

5. Procédé selon la revendication 3 ou 4, dans lequel un recouvrement imperméable à l'air est appliqué (32) sur la couche d'absorption.

6. Procédé selon l'une quelconque des revendications précédentes, dans lequel ladite au moins une couche de film adhésif est appliquée en continu (34) et perforée (36) avant le durcissement.

7. Procédé selon l'une quelconque des revendications précédentes, dans lequel ladite au moins une couche de film adhésif est pourvue (38) d'une perforation avant l'application et ensuite appliquée (14).

8. Procédé selon la revendication 6 ou 7, dans lequel ladite au moins une couche de film adhésif est perforée par un cylindre à aiguilles.

9. Procédé selon l'une quelconque des revendications 6 à 8, dans lequel l'air est absorbé (18') à travers les trous de la perforation avant le durcissement de la couche adhésive ; la couche adhésive devenant d'abord liquide (40) lors du durcissement ; et les trous se refermant (42) lors du durcissement de la couche adhésive.

10. Procédé selon l'une quelconque des revendications précédentes, dans lequel la couche adhésive présente au moins une couche de film adhésif (224) pourvue d'une structure support (226) ; la structure support présentant une structure fermée mais pas complètement étanche de manière telle que grâce aux effets de tension superficielle du film adhésif, la couche adhésive reste cohérente même lors de la liquéfaction temporaire du film adhésif lors du processus de durcissement afin de minimaliser la tendance à la formation de trous dans la couche.

11. Procédé selon l'une quelconque des revendications précédentes, la couche adhésive présentant au moins un film adhésif qui est de type feuille à température ambiante et qui ne devient temporairement liquide qu'après le chauffage.

12. Procédé selon l'une quelconque des revendications précédentes, dans lequel les étapes suivantes sont prévues après le durcissement dans l'étape e) :
- élimination (48) du tissu d'arrachage ;
- disposition (50) d'une couche de recouvrement sur au moins une face latérale du noyau alvéolaire stabilisé par la couche adhésive ; et
- liaison (52) de la couche de recouvrement avec le noyau alvéolaire dans un processus de stratification.

13. Procédé selon l'une quelconque des revendications précédentes, dans lequel le processus de stratification comprend un durcissement du matériau de matrice ; le matériau de matrice devenant d'abord liquide lors du durcissement ; et la couche adhésive empêchant une pénétration du matériau de matrice dans le noyau alvéolaire.

14. Dispositif (100) pour la stabilisation d'un noyau alvéolaire pour une pièce de structure en sandwich, présentant :
- un dispositif de réception (110) pour recevoir une pièce (112) ; et
- un dispositif de vide (114) pour générer une dépression (116) ;
un noyau alvéolaire (120) étant disposé dans le dispositif de réception en tant que pièce, une couche adhésive durcissable (122) étant appliquée sur au moins une face de celui-ci ;
une membrane semi-perméable (124) étant prévue, qui est perméable aux gaz et imperméable aux liquides ; le dispositif de vide étant conçu pour aspirer au moins partiellement l'air (126) se trouvant dans le noyau alvéolaire à travers la membrane semi-perméable (128), la membrane semi-perméable étant éliminée après le durcissement de la couche adhésive.

15. Couche de noyau (200) stabilisée pour une pièce de structure en sandwich, qui est préparée selon les étapes de procédé selon la revendication 1, présentant :
- un noyau alvéolaire (210) présentant une multitude de cellules (212) en forme de nid d'abeille, qui sont séparées les unes des autres par des parois de séparation (214) ; les parois de séparation s'étendant dans la direction de l'épaisseur du noyau alvéolaire ; et
- au moins une couche adhésive (216) appliquée sur les faces frontales des parois de séparation ; la couche adhésive présentant au moins une couche de film adhésif (218) durcie et fermant les cellules en forme de nid d'abeille au moins sur une face de manière telle que lors d'un processus de stratification consécutif avec une couche de recouvrement imprégnée de résine, une pénétration de la résine est réduite ; et la couche adhésive présentant des ouvertures (220) de maximum 0,1 mm de diamètre (222).
